# EUROPÄISCHE PATENTSCHRIFT

(11) **EP 0 839 582 B1**
(45) Veröffentlichungstag und Bekanntmachung des Hinweises auf die Patenterteilung: **26.02.2003**
(21) Anmeldenummer: 97114156.9
(22) Anmeldetag: 16.08.1997
(51) Int. Cl.: B05B 15/12

(54) **Pulver-Sprühbeschichtungskabine für Automatik- und Handbeschichtung**
Powder spray booth for automatic and manual coating
Cabine de pulvérisation de poudre pour revêtement automatique et manuel

(30) Priorität: 02.11.1996 DE 19645262
(43) Veröffentlichungstag der Anmeldung: 06.05.1998
(73) Patentinhaber: ITW Gema AG, 9015 St. Gallen (CH)
(72) Erfinder: Pelzl, Peter, 8458 Dorf (CH); Gelain, Silvano, 9030 Abtwil (CH)
(74) Vertreter: Vetter, Ewald Otto, Dipl.-Ing.

(56) Entgegenhaltungen:
- WO-A-96/25238
- DE-A- 19 524 327
- US-A- 4 220 432
- US-A- 5 236 506

## Beschreibung

Die Erfindung betrifft eine Pulver-Sprühbeschichtungskabine gemäß dem Oberbegriff von Anspruch 1.

Eine solche Pulver-Sprühbeschichtungskabine ist aus der DE 195 24 327 A1 bekannt. Im Kabineninnenraum wird während des Sprühbeschichtungsbetriebes durch eine Luft- und/oder Pulver-Absaugvorrichtung ein Unterdruck erzeugt, damit aus der Kabine kein Pulver nach außen entweicht. An mindestens einer von zwei Objekt-Durchtrittsöffnungen befindet sich auf der Kabinenaußenseite ein Beschichtungsplatz zum Sprühbeschichten von Objekten durch eine Bedienungsperson mit einer Hand-Sprühpistole auf der einen oder anderen Objektseite. Der Beschichtungsplatz hat die Form eines Handbeschichtungskanals. Im Kanaldach und in einem Kabinendach ist je ein Spalt gebildet zum Hindurchführen von Aufhängevorrichtungen für die Objekte. Die Aufhängevorrichtungen gehören zu einer über der Kabine angeordneten Transportvorrichtung. Während des Betriebes wird in der Kabine durch eine Absaugvorrichtung zum Absaugen von Luft und gegebenenfalls auch von Überschußpulver (over spray powder) ein Unterdruck erzeugt, welcher auch verhindern soll, daß Pulverpartikel des Überschußpulvers aus der Kabine entweichen. Die bekannte Kabine hat den Nachteil, daß Pulverpartikel aus dem Handbeschichtungskanal nach außen entweichen können und sich z.B. auf dem Kanaldach ablagern. Weitere säulenförmige, kreisrunde Pulver-Sprühbeschichtungskabinen sind aus den DE 36 02 172 C1, DE 35 38 800 A1 und CH-PS 577 346 bekannt.

Durch die Erfindung soll die Aufgabe gelöst werden, auf einfache Weise zu vermeiden, daß aus dem Handbeschichtungskanal Pulverpartikel in die Außenumgebung entweichen.

Diese Aufgabe wird gemäß der Erfindung durch die Merkmale von Anspruch 1 gelöst.

Die Erfindung wird im folgenden mit Bezug auf die Zeichnungen anhand einer bevorzugten Ausführungsform als Beispiel beschrieben. In den Zeichnungen zeigen
- Fig. 1: eine Querschnittsansicht einer Pulver-Sprühbeschichtungskabine nach der Erfindung in zwei verschiedenen horizontalen Querschnittsebenen IA und IB von Fig. 2,
- Fig. 2: eine Seitenansicht der Pulversprühbeschichtungskabine von einer Ebene II-II von Fig. 1 her gesehen,
- Fig. 3: eine vertikale Querschnittsansicht der Pulver-Sprühbeschichtungskabine längs einer vertikalen Querschnittsebene III-III von Fig. 1 aus gesehen.

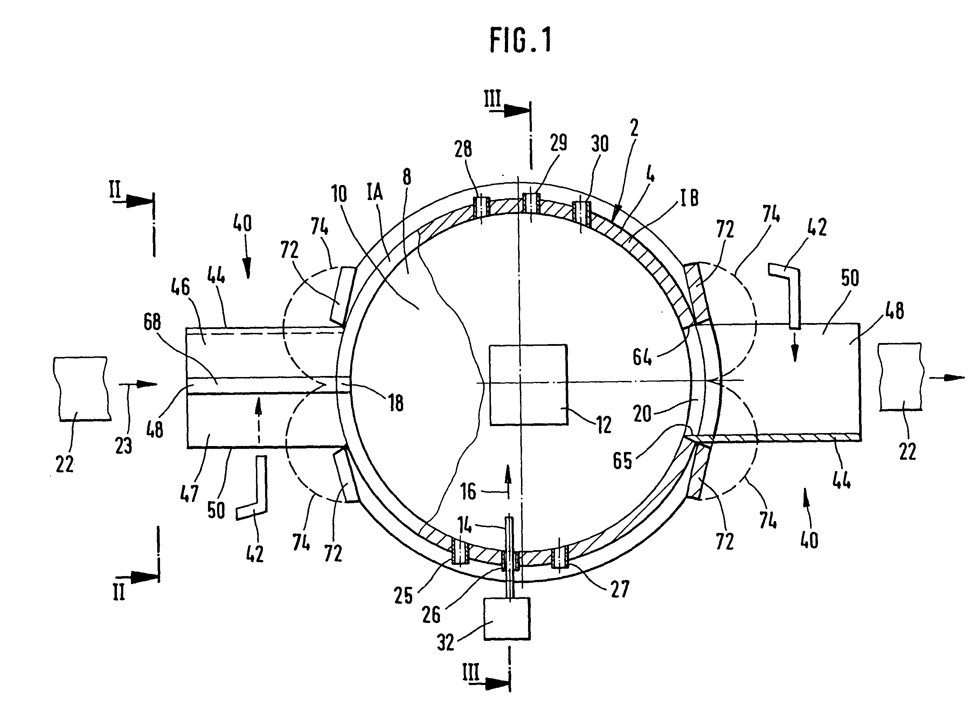

Die in den Zeichnungen dargestellte Pulver-Sprühbeschichtungskabine 2 nach der Erfindung enthält eine aufrecht angeordnete kreiszylindrische Kabinenwand 4, ein Kabinendach 6 und einen Kabinenboden 8. Sie begrenzen einen Kabineninnenraum 10, in welchem Objekte 12 von mindestens einer Automatik-Sprühvorrichtung 14 mit Beschichtungspulver 16 sprühbeschichtet werden können. In der Kabinenwand 4 sind zwei Objekt-Durchtrittsöffnungen 18 und 20 zum automatischen Transportieren von Objekten 12 durch die Kabine 2 mittels einer über der Kabine 2 angeordneten Transportvorrichtung 22. Die in Fig. 1 als Beispiel angenommene Transportrichtung 23 der Objekte 12 kann auch umgekehrt sein. Die Breite der Objekt-Durchtrittsöffnungen 18 und 20 ist kleiner als die Breite des zwischen ihnen liegenden Kabineninnenraumes 10, je quer zur Objekt-Bewegungsrichtung 23 gemessen. In der Kabinenwand 4 ist mindestens ein Sprühvorrichtungs-Einsetzschlitz 25, 26, 27, 28, 29 und/oder 30 gebildet, durch welchen je mindestens eine Automatik-Sprühvorrichtung 14 von außen nach innen in die Kabine 2 einführbar ist und in welchem die Automatik-Sprühvorrichtung 14 quer zum Bewegungsweg der Objekte 12 in Schlitzlängsrichtung auf- und abbewegbar ist. Die Sprühvorrichtung 14 wird von einem Hubständer 32 oder einem Roboter getragen und automatisch positioniert.

Der Boden 8 der Kabine 2 hat die Form eines nach unten enger werdenden Trichters, in welchem Überschußpulver (over-spray powder) zu einer tiefsten Trichterstelle gesaugt und/oder rutschen kann, an welche eine Absaugleitung 34 einer Luftund Pulver-Absaugvorrichtung 35 angeschlossen ist. Letztere erzeugt im Innenraum 10 der Kabine 2 einen Unterdruck und Sog, durch welchen ein Entweichen von Überschußpulver aus der Kabine 2 verhindert und dieses Überschußpulver durch die Absaugleitung 34 abgesaugt wird. Das abgesaugte Pulver wird in bekannter Weise durch einen Filter und/oder einen Zyklon 35 vom Saugluftstrom getrennt und wieder verwendet. Der Saugluftstrom kann in bekannter Weise durch ein Sauggebläse 37 erzeugt werden.

Der Kabineninnenraum ist an mindestens einer der Objekt-Durchtrittsöffnungen 18 und 20, bei der dargestellten Ausführungsform an beiden, auf der Kabinenaußenseite längs des Objekt-Transportweges, gekennzeichnet durch die Pfeile 23, durch einen kanalartigen Handbeschichtungsstand, im folgenden Handbeschichtungskanal 40 bezeichnet, verlängert, in welchem Objekte 12 von der einen oder von der anderen Seite von einer Bedienungsperson mit einer von Hand gehaltenen Hand-Sprühvorrichtung 42 beschichtet werden können. Jeder der beiden Handbeschichtungskanäle 40 hat eine Kanalrückwand 44, welche sich vom Seitenrand der betreffenden Objekt-Durchtrittsöffnung 18 oder 20 parallel zum Objekt-Bewegungsweg erstreckt, ein aus zwei Dachteilen 46 und 47 bestehendes Kanaldach, und einen Kanalboden 48. Die der Kanalrückwand 44 gegenüberliegende Kanalvorderseite 50 ist vorzugsweise vollständig offen, kann jedoch auch durch eine Kanalvorderwand mit einer großen Öffnung gebildet sein, durch welche eine Bedienungsperson die Objekte 12 im Handbeschichtungskanal 40 beobachten und mit der Hand-Sprühvorrichtung 42 sprühbeschichten kann. Der Handbeschichtungskanal 40 hat mindestens an seinem der Kabine 2 zugewandten Ende eine gleiche Querschnittsform und Querschnittsgröße wie die betreffende Objekt-Durchtrittsöffnung 18 oder 20, so daß sie miteinander fluchten.

Die Objekt-Durchtrittsöffnungen 18 und 20 haben an ihrem oberen Ende je eine Öffnungsverlängerung 52, die sich bis in einen Kabinendach-Spalt 58 erstreckt, welcher das Kabinendach 6 in zwei Kabinendachteile 62 und 63 teilt. Durch den Kabinendach-Spalt 58 und die Öffnungsverlängerungen 52 können Hängevorrichtungen 61 hindurchbewegt werden, mit welchen die Objekte 12 an der Transportvorrichtung 22 aufgehängt sind. Die Öffnungsverlängerungen 52 sind unten so breit wie die Objekt-Durchtrittsöffnungen 18 und 20, werden nach oben hin fortlaufend enger, und sind oben so schmal wie der Kabinendach-Spalt 58. Die beiden Handbeschichtungskanal-Dachteile 46 und 47 erstrecken sich entlang der Ränder der Öffnungsverlängerungen 52 satteldachförmig schräg nach oben gegeneinander geneigt mindestens von Seitenrändern 64 und 65 Objekt-Durchtrittsöffnungen 18 und 20 über die Höhe der Öffnungsverlängerungen 52 bis zum Kabinendach 6, und haben dort unter Bildung eines Dachspaltes 68 einen kleinsten Abstand voneinander. Der Handbeschichtungskanal-Dachspalt 68 fluchtet mit dem Kabinendach-Spalt 58 und ihre Unterkanten liegen idealerweise auf gleicher Höhe. Die Unterkanten des Handbeschichtungskanal-Dachspaltes 68 können unterhalb der Unterkanten des Kabinendach-Spaltes 58 liegen, sind jedoch immer wesentlich höher als die Oberkanten der Objekt-Durchtrittsöffnungen 18 und 20 der Kabine 2 angeordnet. Damit wird mit Sicherheit vermieden, daß Pulverpartikel, infolge ihrer Sprühbewegungs-Energie oder infolge des Vakuums in der Kabine 2, aus dem Handbeschichtungskanal 40 nach außen entweichen, z.B. durch den Dachspalt 68.

Die Handbeschichtungskanal-Dachteile 46 und 47 sind an der Kabinenwand 4 befestigt und werden von ihr getragen, vorzugsweise angeschweißt. Der Beschichtungskanalboden 48 kann ortsfest oder ebenfalls austauschbar angeordnet sein. Die Beschichtungskanal-Rückwand 44 ist in Führungsmitteln 70 entfernbar und austauschbar angeordnet.

Die Objekt-Durchtrittsöffnungen 18 und 20 sind vorzugsweise durch Kabinentüren 72 gemäß in Fig. 1 strichpunktiert dargestellten Bewegungsbögen 74 verschließbar, wenn die Kabine 2 gereinigt wird.

Gemäß einer anderen Ausführungsform können die Handbeschichtungskanal-Rückwände 44 je durch eine einflügelige oder mehrflügelige Kabinentür 72 gebildet werden, welche wahlweise in der dargestellten Offenstellung oder in einer Kabinen-Schließstellung oder in der Position der betreffenden Rückwand 44 positioniert wird.

Gemäß einer bevorzugten Ausführungsform bestehen die Kabinenwand 4, das Kabinendach 6, der Kabinenboden 8, die Dachteile 46 und 47 sowie die Rückwand 44 und der Boden 48 der Handbeschichtungskanäle jeweils aus Kunststoff. Dies hat den Vorteil, daß das aus Kunststoff bestehende Beschichtungspulver nur wenig oder nicht an ihnen haftet.

Die Erfindung ist besonders vorteilhaft in Kombination mit einer aufrechtstehenden zylindrischen Kabine 2, weil in ihr im oberen Bereich die gleiche oder nur geringfügig kleinere Luft-Strömungsgeschwindigkeit herrscht wie im unteren Kabinenbereich. Dadurch saugt der Unterdruck der Kabine 2 nicht nur im unteren Bereich, sondern auch im oberen Bereich bei den Öffnungsverlängerungen 52 der Objekt-Durchtrittsöffnungen 18 und 19 ausreichend Luft aus dem Handbeschichtungskanal 40 in die Kabine 2, um ein Entweichen von Pulverpartikeln aus dem Handbeschichtungskanal 40 in die Außenumgebung zu vermeiden. Die erfindungsgemäßen Merkmale, die Objekt-Durchtrittsöffnungen 18 und 20 durch Öffnungsverlängerungen 52 bis zum Kabinendach 6 hinauf schräg enger werdend auszubilden, entlang der Kontur der schräg gegeneinander geneigten Beschichtungskanal-Dachteile 46 und 47 bis hinauf zum Kabinendach 6, kann auch auf Kabinen angewendet werden, welche eine andere Querschnittsform in einer horizontalen Ebene haben, beispielsweise rechteckig sind. Rechteckige Kabinen sind jedoch nicht nur schwieriger zu reinigen in den Kabinenecken, auch wenn diese rund sind, sondern haben auch den Nachteil, daß bei ihnen die Saugluftgeschwindigkeit mit zunehmender Kabinenhöhe stark abnimmt.

Bei der dargestellten Ausführungsform sind die beiden Objekt-Durchtrittsöffnungen 18 und 20 diametral einander gegenüberliegend angeordnet, und die Schlitze 25 bis 30 in der Kabinenwand 4 befinden sich ungefähr um 90° versetzt dazu in der Kabinenwand 4 beidseitig des Objekt-Bewegungsweges.

Gemäß einer anderen Ausführungsform können die beiden Objekt-Durchtrittsöffnungen 18 und 20, mit oder ohne einen Kabinenwandsteg zwischen ihnen, direkt nebeneinander oder nahe nebeneinander angeordnet sein. In diesem Falle werden die zu beschichtenden Objekte 12 im Kabinenraum längs eines Weges geführt, der die Form des griechischen Großbuchstabens Omega hat. Im Falle einer solchen Omega-Kabine muß die Rückwand 44 des Handbeschichtungskanals 40 zwischen den beiden einander benachbarten oder ineinander übergehenden Objekt-Durchtrittsöffnungen 18 und 20 angeordnet werden.

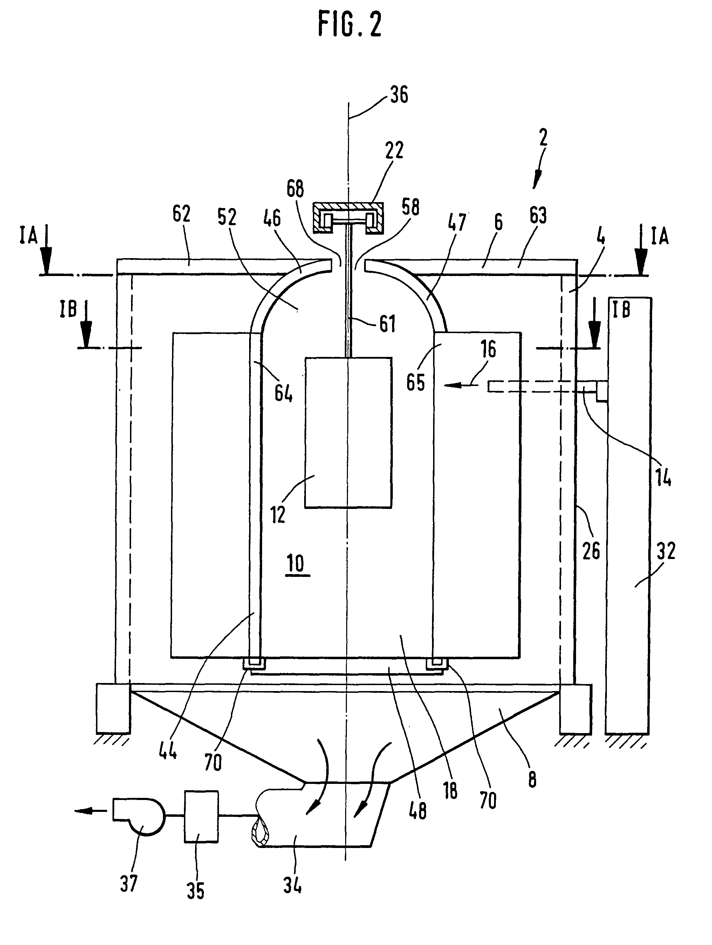

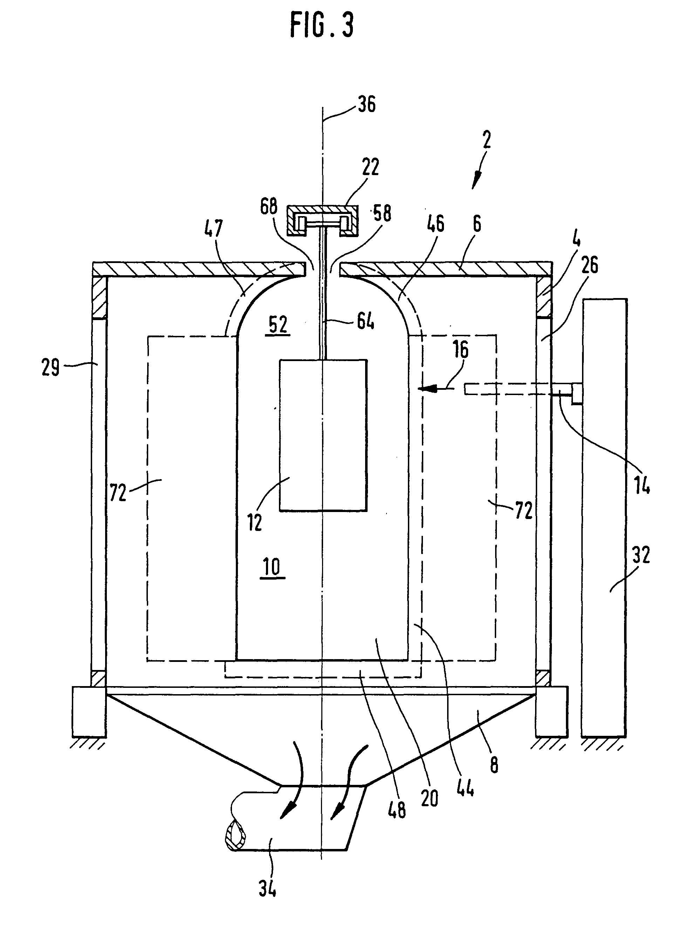

Die Beschichtungskanal-Dachteile 46 und 47 können entsprechend den Fig. 2 und 3 bogenförmig nach oben zusammenlaufen, oder jeweils flach sein und geradlinig schräg zusammenlaufen, oder umgekehrt zu der in den Fig. 2 und 3 dargestellten konvexen Krümmung eine konkave Krümmung haben. Auch andere Formen sind möglich, wesentlich ist jedoch, daß die Objekt-Durchtrittsöffnungen 18 und/oder 20 eine bis zum Kabinendach nach oben enger werdende Breite haben und die Handbeschichtungs-Kanaldachteile 44 und 47 dem Rand dieses nach oben enger werdenden oberen Öffnungsabschnittes 52 folgen. Ein Handbeschichtungskanal 44 kann wahlweise an einer oder beiden Objekt-Durchtrittsöffnungen 18 und 22 angeordnet werden.

## Patentansprüche

1. Pulver-Sprühbeschichtungskabine mit folgenden Merkmalen: ein Kabineninnenraum (10) zum Sprühbeschichten von Objekten (12) durch mindestens eine Automatik-Sprühvorrichtung (14); ein Kabinendach (6), welches durch einen Spalt 58 geteilt ist, der sich parallel zu einem Transportweg erstreckt, längs welchem zu beschichtende Objekte (12) von einer Transportvorrichtung, die über der Kabine sich erstreckt, durch die Kabine transportierbar sind; mindestens zwei Objekt-Durchtrittsöffnungen (18,20) in Kabinenwänden (4) zum Transport der Objekte in die und aus der Kabine, wobei diese Durchtrittsöffnungen durch eine bis in den Dach-Spalt (58) reichende Öffnungsverlängerung (52) verlängert sind, durch welche Objekt-Aufhängevorrichtungen (61) der Transportvorrichtung (22) hindurchragen können; der Kabineninnenraum (10) ist an mindestens einer der Objekt-Durchtrittsöffnungen (18,20) auf der Kabinenaußenseite längs des Objekt-Transportweges durch einen Handbeschichtungskanal (40) verlängert, in welchem die Objekte (12) von Hand mit einer Hand-Sprühvorrichtung (42) mit Pulver sprühbeschichtbar sind; der Kabineninnenraum (10) ist mit einem Saugluftanschluß (34) versehen, durch welchen im Kabineninnenraum (10) ein Unterdruck erzeugbar ist, der sich bis in den Handbeschichtungskanal (40) erstreckt; der Handbeschichtungskanal (40) hat eine Kanalrückwand (44;72) angrenzend an die betreffende Objekt-Durchtrittsöffnung (18,20), und ein Kanaldach (46,47), welches durch einen Kanaldach-Spalt (68) parallel über dem Transportweg der Objekte (12) in zwei Kanaldachteile (46,47) aufgeteilt ist, zwischen welchen die Aufhängevorrichtungen (64) hindurchbewegbar sind,
**dadurch gekennzeichnet,**
**daß** die Öffnungsverlängerungen (52) unten so breit wie die Objekt-Durchtrittsöffnungen (18,20) sind, nach oben hin fortlaufend enger werden, und oben so schmal sind wie der Kabinendach-Spalt (58),
**daß** die beiden Kanaldachteile (46,47), zu den Rändern der Öffnungsverlängerungen (52) fluchtend, satteldachartig schräg zueinander angeordnet sind, daß die beiden Kanaldachteile (46,47) sich mindestens vom oberen Ende der Objekt-Durchtrittsöffnungen (18,20) bis ungefähr zur Höhe des Kabinendaches (6) nach oben erstrecken, so daß der Kanaldach-Spalt (68) ungefähr auf gleicher Höhe wie der Kabinendach-Spalt (58) liegt, jedoch immer höher als die Oberkanten der Objekt-Durchtrittsöffnungen (18, 26).

2. Pulver-Sprühbeschichtungskabine nach Anspruch 1,
**dadurch gekennzeichnet,**
**daß** alle mit Pulver in Berührung kommenden Flächen der Kabine (2) und der Handbeschichtungskanäle (40) aus Kunststoff bestehen.

3. Pulver-Sprühbeschichtungskabine nach Anspruch 1 oder 2,
**dadurch gekennzeichnet,**
**daß** die Kanalrückwand eine an der Kabine (2) schwenkbar befestigte Kabinentür (72) ist, mit welcher die betreffende Objekt-Durchtrittsöffnung (18,20) wahlweise verschließbar ist.

4. Pulver-Sprühbeschichtungskabine nach Anspruch 1 oder 2,
**dadurch gekennzeichnet,**
**daß** die Kanalrückwand (44) wegnehmbar angeordnet ist.

5. Pulver-Sprühbeschichtungskabine nach einem der vorhergehenden Ansprüche,
**dadurch gekennzeichnet,**
**daß** ihre Kabinenwand (4), im horizontalen Querschnitt gesehen, eine kreiszylindrische runde Form hat, daß der Kabinenboden (8) eine nach unten enger werdende Trichterform hat, und daß der Saugluftanschluß (34) an der tiefsten Stelle der Trichterform am Kabinenboden gebildet ist.

## Claims

1. Powder spray-coating cabin with the following characteristics: a cabin interior (10) for spray-coating objects (12) by at least one automatic sprayer (14) ; a cabin roof (6) which is divided by a gap (58) which extends parallel to a path of transport along which objects (12) to be coated can be transported through the cabin by a transport device which extends over the cabin; at least two openings (18, 20) for passage of objects in cabin walls (4), for transport of the objects into and out of the cabin, wherein these openings are extended by an opening extension (52) which reaches as far as the roof gap (58) and through which object suspension devices (61) of the transport device (22) can extend; the cabin interior (10) is extended, at at least one of the openings (18, 20) for passage of objects on the outside of the cabin along the path of object transport, by a manual coating channel (40) in which the objects (12) can be spray-coated with powder manually with a hand sprayer (42); the cabin interior (10) is provided with a vacuum connection (34) by which can be generated in the cabin interior (10) a partial pressure which extends into the manual coating channel (40) ; the manual coating channel (40) has a channel rear wall (44; 72) adjoining the relevant opening (18, 20) for passage of objects, and a channel roof (46, 47) which is divided by a channel roof gap (68) parallel over the path of transport of the objects (12) into two channel roof portions (46, 47) between which the suspension devices (64) can be moved through, **characterised in that** the opening extensions (52) at the bottom are as wide as the openings (18, 20) for passage of objects, become progressively narrower towards the top, and at the top are as narrow as the cabin roof gap (58), **in that** the two channel roof portions (46, 47), in line with the edges of the opening extensions (52), are arranged obliquely to each other in gable roof fashion, **in that** the two channel roof portions (46, 47) extend upwards at least from the upper end of the openings (18, 20) for passage of objects approximately as far as the level of the cabin roof (6) so that the channel roof gap (68) lies approximately at the same level as the cabin roof gap (58), but always higher than the upper edges of the openings (18, 26) for passage of objects.

2. Powder spray-coating cabin according to claim 1, **characterised in that** all surfaces of the cabin (2) and manual coating channels (40) which come in contact with powder are made of plastic.

3. Powder spray-coating cabin according to claim 1 or 2, **characterised in that** the channel rear wall is a cabin door (72) which is pivotably attached to the cabin (2) and with which the relevant opening (18, 20) for passage of objects can be closed optionally.

4. Powder spray-coating cabin according to claim 1 or 2, **characterised in that** the channel rear wall (44) is mounted removably.

5. Powder spray-coating cabin according to any of the preceding claims, **characterised in that** its cabin wall (4), seen in horizontal cross-section, has a cylindrical round shape, **in that** the cabin floor (8) has a downwardly narrowing funnel shape, and **in that** the vacuum connection (34) is formed at the lowermost point of the funnel shape on the cabin floor.

## Revendications

1. Cabine de revêtement par projection de poudre ayant les caractéristiques suivantes: un espace intérieur de cabine (10) pour le revêtement par projection d'objets (12) par au moins un dispositif de projection automatique (14) ; un toit de cabine (6) qui est divisé par une fente (58) qui s'étend parallèlement à un chemin de transport le long duquel les objets à revêtir (12) sont transportés à travers la cabine par un dispositif de transport qui s'étend au-dessus de la cabine ; au moins deux ouvertures de passage d'objets (18, 20) faites dans des parois (4) de la cabine pour l'entrée des objets dans la cabine et la sortie de ceux-ci de celle-ci, ces ouvertures de passage étant rallongées par une rallonge (52) qui va jusque dans la fente de toit (58) et à travers laquelle peuvent passer des dispositifs de suspension d'objets (61) du dispositif de transport (22) ; l'espace intérieur de cabine (10) est rallongé à au moins une des ouvertures de passage d'objets (18, 20), sur le côté extérieur de la cabine, le long du chemin de transport d'objets, par un canal de revêtement manuel (40) dans lequel les objets (12) peuvent être revêtus par projection de poudre à la main au moyen d'un dispositif de projection manuel (42) ; l'espace intérieur de cabine (10) est pourvu d'une sortie d'air à aspiration (34) par laquelle peut être produite dans l'espace intérieur de cabine (10) une dépression s'étendant jusque dans le canal de revêtement manuel (40) ; le canal de revêtement manuel (40) a une paroi arrière (44 ; 72) contiguë à l'ouverture de passage d'objets correspondante (18, 20) et un toit (46, 47) qui est divisé par une fente (68), parallèlement au chemin de transport des objets (12), en deux parties (46, 47) entre lesquelles peuvent passer les dispositifs de suspension (64), **caractérisée par le fait que** les rallonges d'ouverture (52) sont en bas aussi larges que les ouvertures de passage d'objets (18, 20), se rétrécissent de façon continue vers le haut et sont en haut aussi étroites que la fente de toit de cabine (58), que les deux parties de toit de canal (46, 47), alignées avec les bords des rallonges d'ouverture (52), sont disposées obliquement l'une par rapport à l'autre à la manière d'un toit en selle, et que les deux parties de toit de canal (46, 47) s'étendent vers le haut au moins de l'extrémité supérieure des ouvertures de passage d'objets (18, 20) jusqu'à approximativement la hauteur du toit de cabine (6), de sorte que la fente de toit de canal (68) est située approximativement à la même hauteur que la fente de toit de cabine (58), mais toujours plus haut que le sommet des ouvertures de passage d'objets (18, 20).

2. Cabine de revêtement par projection de poudre selon la revendication 1, **caractérisée par le fait que** toutes les surfaces de la cabine (2) et des canaux de revêtement manuel (40) avec lesquelles la poudre vient en contact sont en plastique.

3. Cabine de revêtement par projection de poudre selon l'une des revendications 1 et 2, **caractérisée par le fait que** la paroi arrière de canal est une porte de cabine (72) fixée battante à la cabine (2) et permettant de fermer à volonté l'ouverture de passage d'objets correspondante (18, 20).

4. Cabine de revêtement par projection de poudre selon l'une des revendications 1 et 2, **caractérisée par le fait que** la paroi arrière de canal (44) peut être enlevée.

5. Cabine de revêtement par projection de poudre selon l'une des revendications précédentes, **caractérisée par le fait que** la section horizontale de sa paroi (4) est circulaire, que le bas (8) de la cabine a la forme d'un entonnoir se rétrécissant vers le bas, et que la sortie d'air à aspiration (34) est formée sur le bas de la cabine à l'endroit le plus bas de l'entonnoir.
